# EUROPÄISCHE PATENTSCHRIFT

(11) **EP 3 830 621 B1**
(45) Veröffentlichungstag und Bekanntmachung des Hinweises auf die Patenterteilung: **30.08.2023**
(21) Anmeldenummer: 19748505.5
(22) Anmeldetag: 26.07.2019
(51) Int. Cl.: G02B 6/44, H01B 11/22

(54) **OPTISCH-ELEKTRISCHE LEITERANORDNUNG MIT LICHTWELLENLEITER UND ELEKTRISCHER LEITSCHICHT**
OPTICAL-ELECTRICAL CONDUCTOR ASSEMBLY COMPRISING AN OPTICAL WAVEGUIDE AND AN ELECTRICALLY CONDUCTING LAYER
AGENCEMENT DE CONDUCTEUR OPTO-ÉLECTRIQUE COMPRENANT UN GUIDE D'ONDES OPTIQUES ET UNE COUCHE ÉLECTROCONDUCTRICE

(30) Priorität: 27.07.2018 DE 102018118225
(43) Veröffentlichungstag der Anmeldung: 09.06.2021
(73) Patentinhaber: SCHOTT AG, 55122 Mainz (DE)
(72) Erfinder: SCHULTHEIS, Bernd, 55270 Schwabenheim (DE); KEIPER, Oliver, 65510 Hünstetten (DE); HENN, Christian, 55546 Frei-Laubersheim (DE)
(74) Vertreter: Blumbach · Zinngrebe Patentanwälte PartG mbB
(86) Internationale Anmeldenummer: PCT/EP2019/070264
(87) Internationale Veröffentlichungsnummer: WO 2020/021102

(56) Entgegenhaltungen:
- WO-A1-94/22039
- WO-A1-2016/019578
- JP-A- S57 124 303
- US-A- 5 497 442
- US-A1- 2017 276 869

## Beschreibung

Die Erfindung betrifft eine optisch-elektrische Leiteranordnung mit einem Lichtwellenleiter und einer elektrischen Leitschicht, welche auf einer äußeren Mantelschicht des Lichtwellenleiters angeordnet ist. Ferner betrifft die Erfindung ein Verfahren zur Herstellung einer optisch-elektrischen Leiteranordnung mit einem Lichtwellenleiter und einer elektrischen Leitschicht.

Lichtwellenleiter dienen zur Übertragung von Licht oder Energie für zahlreiche Anwendungen. Dabei ist es mitunter wünschenswert, zusätzlich zur Lichtübertragung eine Übertragung von elektrischen Signalen zu ermöglichen, beispielsweise, um Beschädigungen des Lichtwellenleiters oder einen Faserbruch feststellen zu können.

Die deutsche Patentanmeldung DE 10 2012 109 088 A1 beschreibt etwa ein faseroptisches Konversionsmodul als Teil einer Beleuchtungseinrichtung bei einem Fahrzeug, wobei Lichtleitfasern mit elektrisch leitfähiger Beschichtung zum Einsatz kommen können, welche es erlauben, einen Bruch von Lichtleitfasern festzustellen. Ein Bruch einer Lichtleitfaser führt zu einer Unterbrechung eines elektrischen Stromkreispfades, was durch fehlenden oder abfallenden Strom in Nachweismitteln feststellbar ist und zur Abschaltung von Anregungslichtquellen ausgenutzt wird.

Die deutsche Patentanmeldung DE 10 2006 029 203 A1 betrifft eine Licht emittierende Vorrichtung mit einem Lichtleiter. Auf der Oberfläche des Mantelbereichs des Lichtleiters kann eine elektrisch leitfähige Verbindung vorhanden sein, die sich um den Mantelbereich windet bzw. umlaufend um den Lichtleiter angeordnet ist und somit eine mögliche Beschädigung bzw. einen Bruch des Lichtleiters an verschiedenen Stellen detektieren kann.

Das US-Patent 5 135 295 beschreibt piezoelektrische und Ultraschallvorrichtungen, die optische Fasern verwenden, die mit dünnen piezoelektrischen und ferroelektrischen Blei-Zirkonat-Titanat-Filmen beschichtet sind. Die PZT-Dünnschichten werden chemisch durch ein Sol-Gel-Verfahren hergestellt.

Das US-Patent 5 497 442 betrifft eine optische Faser für die Hochleistungslaserübertragung mit einer Glasfaser mit einem Faserkern und einem den Faserkern umgebenden Fasermantel. Eine Zwischenschicht aus Polymer ist auf dem Fasermantel angeordnet, eine metallische Filmbeschichtung ist auf der Zwischenschicht angeordnet und die Metallbeschichtung ist mit einem Außenmantel gegen mechanisch induzierte Beschädigungen geschützt.

Die US-Patentanmeldung 2017/0276869 A1 beschreibt metallisierte polymerbeschichtete optische Fasern, die zur Wärmeableitung ausgebildet ist. Eine beispielhafte metallisierte polymerbeschichtete optische Faser umfasst eine dünne Chromschicht, die bei niedriger Temperatur im Vakuum auf die Polymerummantelung aufgebracht und dann mit einer dickeren Kupferschicht galvanisiert wird. Im Betrieb leitet die Kupferschicht über einen Kühlkörper Wärme aus dem Faserkern und den Ummantelungen ab.

Die internationale Patentanmeldung WO 2016/019578 A1 betrifft eine verlustarme und hochtemperaturbeständige optische Faser mit einer Glaskernschicht, einer Glasummantelung, die die Außenfläche der Glaskernschicht umgibt, einer auf dem Mantel angeordneten Polymerbeschichtung und einer Metallbeschichtung auf der Polymerbeschichtung. Alternativ ist eine Klebeschicht zwischen der Polymerbeschichtung und der Metallbeschichtung angeordnet, so dass die Metallbeschichtung fester mit der Polymerbeschichtung verbunden ist.

Die JPS57124303A zeigt eine optische Faser mit einer elektrischen Leiterschicht auf der Außenseite und einer Metallbeschichtung auf der Außenseite der Leiterschicht, um wasser- und feuchtigkeitsbeständige Eigenschaften zu erhalten.

Die WO94022039A1 beschreibt ein zusammengesetztes faseroptisches / elektrisches koaxiales Signalkabel, bei dem eine gepufferte, ummantelte optische Faser von Strängen eines elektrischen Signalleiters innerhalb der üblichen Schichten aus Isolation, Abschirmung, Festigkeitselementen und Außenmantel umgeben ist.

Der Erfindung liegt die Aufgabe zugrunde, Lichtwellenleiter mit elektrischer Leitschicht bereitzustellen, welche insbesondere hinsichtlich Herstellung und Qualität optimiert sind. Ein Aspekt der Aufgabe der Erfindung ist es, leitfähige Beschichtungen auf den bei Lichtwellenleitern üblichen Polymermänteln bereitzustellen, wobei deren im Allgemeinen niedrige Temperaturbeständigkeit zu beachten ist.

Die Aufgabe der Erfindung wird durch den Gegenstand der unabhängigen Ansprüche gelöst. Vorteilhafte Weiterbildungen der Erfindung sind in den Unteransprüchen definiert.

Es wird eine optisch-elektrische Leiteranordnung bereitgestellt, welches einen Lichtwellenleiter mit einer äußeren, organischen Mantelschicht umfasst. Weiterhin umfasst der Lichtwellenleiter ein Funktionsschichtsystem, welches einen Grundschichtbereich und eine auf dem Grundschichtbereich aufgebrachte elektrisch leitende Leitschicht umfasst. Der Grundschichtbereich kann aus einer einzelnen Schicht oder aus einer Abfolge von Schichten bestehen. Ebenso kann die elektrisch leitende Leitschicht aus einer einzelnen Schicht oder einer Schichtabfolge bestehen.

Hiermit wird neben einer Lichtübertragung eine zusätzliche Übertragung von elektrischen Signalen ermöglicht. Ferner wird eine Faserbruchkontrolle oder eine Detektion einer Schädigung der Faser ermöglicht (Sicherheitsfunktion). Darüber hinaus wird eine Schutzwirkung für die Faser ermöglicht, z.B. falls Laserlicht zurück reflektiert wird.

Der Lichtwellenleiter auf dessen äußerer Mantelschicht sich das Funktionsschichtsystem befindet kann in unterschiedlicher Art ausgebildet sein, wie dem Fachmann bekannt ist. Typischerweise umfasst der Lichtwellenleiter zumindest einen optisch leitenden Kern, vorzugsweise aus Glas, insbesondere Quarzglas, in welchen elektromagnetische Strahlung, beispielsweise die eines Lasers, eingekoppelt werden kann. Der Kern kann unmittelbar umgeben sein von einer Umhüllung, welche sich zwischen dem Kern und der äußeren Mantelschicht befindet. Eine solche Umhüllung kann ebenfalls aus Quarzglas sein. Der innere Kern weist dabei einen größeren Brechungsindex auf als die Umhüllung. Der Kern weist vorzugsweise einen Durchmesser von 10 bis 600 µm auf, die Umhüllung hat typischerweise einen Durchmesser, der dem 1,1- bis 1,5-fachen des Kerndurchmessers entspricht, die Wandstäre der Mantelschicht liegt bevorzugt im Bereich von 1 bis 100 µm. Es kann auch vorgesehen sein, dass der innere Kern unmittelbar von der äußeren Mantelschicht umgeben ist. In diesem Fall ist der Brechungsindex des Kerns größer als derjenige der Mantelschicht.

In einer Ausführungsform, nicht Teil der beanspruchten Erfindung, kann auch vorgesehen sein, dass das Funktionsschichtsystem unmittelbar auf dem optisch leitenden Kern befindlich ist. In dieser Ausführungsform umfasst der Lichtwellenleiter demnach keine äußere Mantelschicht. Mit anderen Worten kann z.B. eine reine Quarzglasfaser vorgesehen sein, wobei darauf direkt die Funktionsschichten aufgebracht sind und insbesondere durch eine letzte polymere Schicht abgeschlossen sein kann.

Die den Kern umgebende organische Mantelschicht, welche auch als Schlichte ausgebildet sein kann, umfasst vorzugsweise Polyamid (PA), Polyimid (PI) oder Polymethylmethacrylat (PMMA) oder Wachs, wachsähnliche Bestandteile oder Alkylsilan oder ist aus zumindest einem dieser Materialien gefertigt.

Erfindungsgemäß umfasst das Funktionsschichtsystem einen unterhalb der Leitschicht befindlichen Grundschichtbereich. Der Grundschichtbereich umfasst eine oberflächliche Schicht der äußeren Mantelschicht und kann weiterhin eine auf der äußeren Mantelschicht aufgebrachte Schicht mit einem Oxid, insbesondere SiO₂, TiO₂ Al₂O₃, SnO₂, HfO₂ oder einem Borid, Carbid, Nitrid, Oxinitrid, Carbonitrid oder einem Metall, insbesondere Si, Ti, Mo oder Cr, oder eine auf der äußeren Mantelschicht aufgebrachte Abfolge solcher Schichten umfassen.

Mit anderen Worten kann die äußere Mantelschicht mit einer einzelnen oder mit mehreren Schichten beschichtet sein. Eine solche Schicht oder Schichtfolge kann etwa herstellbar oder hergestellt sein durch ein Beschichtungsverfahren, wie weiter unten näher ausgeführt ist. Der Grundschichtbereich kann insbesondere ausgebildet sein als eine anorganische Haftvermittlerschicht auf Basis von Oxiden, wie SiO2, TiO₂ Al₂O₃, SnO₂, HfO₂, usw., Boriden, Carbiden, Nitriden, Oxinitriden, Carbonitriden oder Metallen, wie z.B. Si, Ti, Mo oder Cr, als Einzelschicht oder als Schichtfolge aus diesen Stoffen. Bevorzugte Schichtsysteme umfassen TiO2. Mit anderen Worten enthält der Grundschichtbereich bevorzugt TiO₂ und umfasst insbesondere mehrere Schichten, wobei zumindest eine dieser Schichten TiO₂ enthält. Diese Beschichtungen können u.a. mittels einem Sputterprozess von einem sogenannten Sputtertarget appliziert werden, wobei diese Materialien als metallische Targets oder als teilkeramische Targets vorliegen können. Die Reinheit der Targets wird typischerweise mit 99% oder mehr angegeben. Geringere Reinheiten sind aber auch möglich. Hierbei sind dann ggf. höhere Schichtdicken erforderlich.

Erfindungsgemäß umfasst der Grundschichtbereich eine oberflächliche Schicht der äußeren Mantelschicht mit zumindest einer veränderten Oberflächeneigenschaft, umfassend eine erhöhte Oberflächenenergie und/oder eine erhöhte Anzahl von Sauerstoffradikalen.

Eine solche oberflächliche Teilschicht der Mantelschicht kann beispielsweise herstellbar oder hergestellt sein durch chemische oder physikalische Prozesse zur Veränderung der Oberflächeneigenschaften der Mantelschicht, insbesondere Plasmabehandlung (z.B. Niederdruck-Plasma oder atmosphärisches Plasma), UV-Behandlung, Lichtbogenentladung (Corona) und/oder durch chemische Behandlung, z.B. mittels alkalischen Reinigern im Ultraschallbad, oder eine Kombination solcher Verfahren, wie weiter unten näher beschrieben. Mit anderen Worten ist der Grundschichtbereich oder eine unterste Schicht des Grundschichtbereichs durch einen die äußere Oberfläche umfassenden radialen Teil der äußeren Mantelschicht gebildet.

Der Grundschichtbereich kann also z.B. aus einer einzelnen Schicht bestehen, wobei diese einzelne Schicht mittels chemischer oder physikalischer Prozesse auf Basis der äußeren Mantelschicht des Lichtwellenleiters hinsichtlich der Oberflächeneigenschaften gebildet ist. Der Grundschichtbereich kann aber auch aus einer Abfolge von Schichten bestehen, wobei z.B. die unterste Schicht des Grundschichtbereichs durch chemische oder physikalische Prozesse auf Basis der äußeren Mantelschicht des Lichtwellenleiters hinsichtlich der Oberflächeneigenschaften gebildet ist und auf dieser untersten Schicht weitere Schichten aufgebracht sind.

Es kann demnach auch vorgesehen sein, dass der Grundschichtbereich aus mehreren Schichten besteht, wobei eine unterste Schicht als eine solche oberflächliche Schicht der äußeren Mantelschicht ausgebildet ist und zumindest eine weitere darüber befindliche Schicht des Grundschichtbereichs als eine auf der äußeren Mantelschicht aufgebrachte Schicht ausgebildet ist. Ein solcher mehrschichtige Grundschichtbereich kann z.B. herstellbar oder hergestellt sein indem zuerst eine zumindest abschnittsweise Behandlung der Mantelschicht beispielsweise mittels Plasmabehandlung, UV Behandlung, Lichtbogenentladung und/oder chemischer Behandlung durchgeführt wird und danach eine Beschichtung der Mantelschicht mit einem Beschichtungsverfahren erfolgt. Durch die Behandlung wird zum einen die Oberflächenenergie erhöht, zum anderen werden freie Sauerstoffradikale erzeugt, welche eine gute Anhaftung folgender Beschichtungen gewährleisten. Die Behandlungen erfolgen bevorzugt vollflächig an der Faseroberfläche, d.h. der Oberfläche des Lichtwellenleiters mit Mantelschicht. Auf der durch Beschichtungsverfahren aufgebrachten Schicht können weitere Schichten aufgebracht sein.

Der Grundschichtbereich weist vorzugsweise eine Dicke zwischen 5nm und 3000nm auf, bevorzugter zwischen 5nm und 1000nm, besonders bevorzugt zwischen 10nm und 100nm. Ferner können die einzelnen Schichten des Grundschichtbereichs jeweils eine Dicke zwischen 5nm und 1000nm, bevorzugt zwischen 10nm und 100nm aufweisen. Beispielsweise kann ein zumindest zweischichtiger Grundschichtbereich vorgesehen sein, wobei die untere Schicht als eine oberflächliche Schicht der äußeren Mantelschicht ausgebildet ist und darüber eine Schicht mit einer Dicke zwischen 5nm und 1000nm, bevorzugt zwischen 10nm und 100nm, aufgebracht ist. Die Schichtdicke kann abhängig vom thermischen Ausdehnungskoeffizienten des zu beschichtenden Lichtwellenleiters bzw. seiner äußeren Polymerschicht im Vergleich zum thermischen Ausdehnungskoeffizienten der Leitschicht bestimmt werden.

Der Grundschichtbereich kann insbesondere als Haftvermittlerschicht ausgebildet sein. Demnach kann vorgesehen sein, dass zwischen dem Grundschichtbereich und der darauf aufgebrachten Leitschicht eine größere Haftung besteht als sie bestehen würde zwischen der äußeren Mantelschicht und einer auf dieser aufgebrachten identischen Leitschicht. Eine gute Haftung ergibt sich z.B., wenn ein sogenannter Tape-Test (Druckfarbenhaftung) in Anlehnung an ASTM F 2252/ Sun Chemical-Hartmann PV 01 erfüllt werden kann. Hierbei wird ein Klebestreifen auf die beschichteten Fasern aufgebracht und unter einem definierten Winkel gleichmäßig abgezogen. Befindet sich nach dem Abziehen keine Beschichtung an dem Klebestreifen und zeigen sich bei der Beschichtung keine Delaminationen, so gilt der Test als bestanden. Die Haftung kann auch mit einem Haftungstest nach DIN 58196-6 (1995-07) überprüft werden. Mit anderen Worten kann eine erhöhte Haftung bestehen zwischen der Leitschicht, insbesondere der untersten Schicht der Leitschicht, und der darunter befindlichen obersten Schicht des Grundschichtbereichs, welche ausgebildet sein kann als eine oberflächliche Schicht der äußeren Mantelschicht mit erhöhter Oberflächenenergie und/oder erhöhter Anzahl von Sauerstoffradikalen oder als eine auf der Mantelschicht durch Beschichtung aufgebrachten Schicht. Es ist auch möglich, dass der Grundschichtbereich aus einer Mehrzahl von Schichten besteht, wobei zumindest eine oder eine jede oberhalb der untersten Schicht aufgebrachte Schicht eine höhere Haftung auf der darunter befindlichen Schicht aufweist als sie auf der Schicht, welche sich unter der darunter befindlichen Schicht befindet, aufweisen würde.

Ferner kann der Grundschichtbereich als Barriereschicht ausgebildet sein. Demnach kann vorgesehen sein, dass der Grundschichtbereich, insbesondere zumindest eine der auf der äußeren Mantelschicht durch Beschichtung aufgebrachten Schichten des Grundschichtbereichs ein Eindiffundieren von Polymerbestandteilen beispielsweise Säuren und/oder Sauerstoff und insbesondere von Ionen saurer oder alkalischer Lösungen in die Leitschicht hemmt oder blockiert. Der Grundschichtbereich kann demnach eine Permeation von z.B. Säuren, Sauerstoff oder auch anderen Bestandteilen der Luft in die untere Oberfläche der Leitschicht verzögern oder verhindern. Insbesondere bei der Aufbereitung medizinischer Produkte können alkalische Reiniger bzw. Desinfektoren zum Einsatz (z.B. NEODISHER mit einem ph-Wert von etwa 11). Ferner kann das Spülmittel Natriumhypochlorit (NaClO), ein Bleich- oder auch Desinfektionsmittel zum Einsatz kommen.

Der Grundschichtbereich weist vorzugsweise einen thermischen Ausdehnungskoeffizienten auf, welcher zwischen dem thermischen Ausdehnungskoeffizienten der Mantelschicht und dem thermischen Ausdehnungskoeffizienten der Leitschicht liegt. Bei einem vorgegebenen thermischen Ausdehnungskoeffizienten (CTE) der Mantelschicht, welcher z.B. im Bereich von > 15*E-6 1/K liegen kann, können die Eigenschaften der Grundschichten abhängig von der verwendeten Leitschicht gewählt werden. Wird z.B. eine Molybdän Beschichtung als Leitschicht verwendet, welche typischerweise einen CTE von 5-6*E-6 1/K besitzt, kann ein Grundschichtbereich mit einem höheren CTE gewählt werden. Als Beispiel kann sich dann eine TiO2 Beschichtung mit einem CTE von 7-8*E-6 1/K anbieten. Vorzugsweise kann vorgesehen sein, dass der thermische Ausdehnungskoeffizient der Mantelschicht größer ist als der thermische Ausdehnungskoeffizient des Grundschichtbereichs. Ferner kann vorgesehen sein, dass der thermische Ausdehnungskoeffizient des Grundschichtbereichs größer als oder gleich ist wie der thermische Ausdehnungskoeffizient der Leitschicht. Bei einem mehrschichtigen Grundschichtbereich gilt dies zumindest für eine ihrer Schichten. Außerdem kann vorgesehen sein, dass der Grundschichtbereich eine Abfolge von Schichten umfasst, welche jeweils einen thermischen Ausdehnungskoeffizienten aufweisen, welche entsprechend der Abfolge der Schichten aufsteigen oder absteigen. Es kann auch durch quasi-kontinuierliche Veränderung der Zusammensetzung ein Gradient des thermischen Ausdehnungskoeffizienten (CTE) erzielt werden. Die Auswahl der Materialien des Grundschichtbereichs kann abhängig vom thermischen Ausdehnungskoeffizienten des zu beschichtenden Lichtwellenleiters bzw. seiner äußeren Polymerschicht im Vergleich zum thermischen Ausdehnungskoeffizienten der Leitschicht bestimmt werden.

Die auf dem Grundschichtbereich aufgebrachte Leitschicht umfasst vorzugsweise eine Schicht mit Titan, Silizium (ggf. mit n- oder p-leitenden Dotierstoffen dotiert zur Erhöhung der intrinsischen Leitfähigkeit), Aluminium, Gold, Silber, Molybdän, Wolfram oder Zirkon, insbesondere einer Legierung eines dieser Stoffe mit Ni, Zn, Y, Sn, Ge oder eine Abfolge solcher Schichten. Als besonders bevorzugt haben sich Ti und Mo gezeigt. Eine Schicht mit oder aus Molybdän ist demnach z.B. besonders bevorzugt. Mit anderen Worten kann die Leitschicht aus einer einzelnen Schicht oder aus einer Schichtfolge bestehen, wobei zumindest eine Schicht aus Titan, (dotiertem) Silizium, Aluminium, Gold, Silber, Molybdän, Wolfram, Zirkon oder aus Legierungen aus mindestens einer der genannten leitfähigen Stoffe, Ni und deren Legierungen, Zn, Y, Sn, Ge ist. Eine solche Schicht oder Schichtfolge kann beispielsweise herstellbar oder hergestellt sein durch ein Beschichtungsverfahren, wie weiter unten näher ausgeführt ist.

Die auf dem Grundschichtbereich aufgebrachte Leitschicht kann ferner auch Ag, Cu, Cr, Ni, ITO umfassen oder daraus bestehen, wobei aber im medizintechnischen Bereich ggf. Anforderungen der Biokompatibilität und Zytotoxizität (ISO 10993-5:2009) zu beachten sind.

Die Leitschicht weist vorzugsweise eine Dicke zwischen 5nm und 6000nm auf, bevorzugter zwischen 5nm und 2000nm, besonders bevorzugt zwischen 10nm und 200nm. Ferner kann zumindest eine der Schichten oder eine jede der Schichten der Leitschicht eine Dicke zwischen 5nm und 2000nm, bevorzugt zwischen 10nm und 200nm aufweisen. Die Schichtdicke kann bestimmt sein in Abhängigkeit vom zu erzielenden elektrischen Widerstand bzw. Flächenwiderstand, wobei der Flächenwiderstand innerhalb bestimmter Schichtdickenbereiche sich umgekehrt proportional zur Schichtdicke der Leitschicht verhält. Eine Schichtdicke von zumindest 5nm hat den Vorteil, dass die Gefahr einer Inselbildung (nur bereichsweise Beschichtung) vermieden wird und daher eine geschlossene Schicht entsteht. Im Falle einer Inselbildung ergibt sich aufgrund der isolierenden Bereiche um die leitfähigen "Inseln" keine gleichmäßige Leitfähigkeit. Gegebenenfalls können jedoch auch Schichtdicken von zumindest 3nm ausreichend sein.

Die Leitschicht weist vorzugsweise einen Flächenwiderstand zwischen 0,01 und 1000, bevorzugt zwischen 0,01 und 100, besonders bevorzugt zwischen 0,01 und 50 Ohm/sqr auf (wobei die Einheit Ohm/sqr der Einheit Ohm entspricht). Unter dem Flächenwiderstand wird der spezifische elektrische Widerstand geteilt durch die Schichtdicke verstanden. Für den spezifischen elektrischen Widerstand gilt beispielsweise Ti: 8E-5 Ohm cm, Si: 2 Ohm cm, Au: 6E-8 Ohm cm, Ag: 1E-5 Ohm cm, Mo: 4,9 E-5 Ohm cm. Eine dünne 200nm Ti-Beschichtung zeigt einen Flächenwiderstand von 3,9 Ohm/sqr. Hieraus ergibt sich ein spezifischer Widerstand von 7,8*E-5 Ohm*cm.

Abgesehen von dem Grundschichtbereich und der Leitschicht umfasst das Funktionsschichtsystem ferner eine auf der Leitschicht aufgebrachte Barriereschicht (Passivierungsschicht), wobei diese Barriereschicht aus einer einzelnen Schicht oder einer Abfolge von Schichten bestehen kann. Die Barriereschicht ist ausgebildet, ein Eindiffundieren von Sauerstoff und/oder von Ionen saurer oder alkalischer Lösungen, in die Leitschicht zu hemmen oder zu blockieren. Insbesondere bei der Aufbereitung medizinischer Produkte kommen mitunter alkalische Reiniger zum Einsatz (z.B. NEODISHER mit einem ph-Wert von etwa 11). Auch kann das Spülmittel Natriumhypochlorit (NaClO), ein Bleich- oder auch Desinfektionsmittel, zum Einsatz kommen. Die Barriereschicht kann demnach eine Permeation von z.B. Säuren, Sauerstoff oder auch anderen Bestandteilen der Luft in die obere Oberfläche der Leitschicht verzögern oder verhindern. Darüber hinaus kann die Barrierebeschichtung dafür sorgen, dass mechanische Angriffe auf die Leitschicht oder auch die Faser reduziert werden können und bildet damit einen mechanischen Schutzfilm. In Kombination mit einem entsprechenden Grundschichtbereich kann die Leitschicht somit beidseits vor unerwünschter Diffusion geschützt sein.

Vorzugsweise weist die Barriereschicht oder zumindest eine der Schichten der Barriereschicht eine Härte von mindestens 800 HV, vorzugsweise mindestens 1200 HV, besonders bevorzugt mindestens 2000 HV gemäß der Prüfnorm DIN EN ISO 14577-4:2007-8 auf. Die Barriereschicht kann somit auch als eine mechanische Schutzschicht für die Leitschicht, insbesondere für eine metallische Schicht, und/oder als Schutz für den Lichtwellenleiter bzw. die Mantelschicht (Buffermaterial) ausgebildet sein. Insbesondere schützen Hartstoffmaterialien aus z.B. Carbiden oder Nitriden aufgrund deren erhöhten Härte, wie z.B. AIN: HV bis ca. 2000, Si3N4: HV bis ca. 2500.

Die Barrierschicht umfasst eine auf der Leitschicht aufgebrachte Schicht mit einem Nitrid, insbesondere Si₃N₄, BN, AIN, TiN, AlSiN, SiON, SiAION oder einer Legierung eines dieser Stoffe, oder mit einem Oxid, insbesondere Oxide von Si, Al, Ti, Zr, Zn, Sn, Ta, Nb, Y oder einem ternären System aus zumindest einem dieser Stoffe, oder mit einem Carbid, Borid, Oxinitrid, Carbonitrid, oder eine auf der Leitschicht aufgebrachte Abfolge solcher Schichten. Als besonders geeignet zeigen sich Schichten mit TiO₂ TiN, Si₃N₄ oder SiO₂. Aufgrund der oben genannten CTE-Zusammenhänge sind Barrierebeschichtungen mit vergleichbarem CTE zur Leitschicht bevorzugt zu verwenden. Mit anderen Worten kann der thermische Ausdehnungskoeffizient der Barriereschicht dem 0,5-fachen bis 2-fachen, bevorzugt 0,75-fachen bis 1 ,25-fachen des thermischen Ausdehnungskoeffizienten der Leitschicht entsprechen. Ferner kann auch die Barriereschicht aus einer einzelnen Schicht oder aus einer Schichtfolge bestehen. Vorzugsweise ist zumindest eine Schicht der Barriereschicht aus Nitrid, z.B. Si₃N₄, BN, AIN, TiN, AISiN oder einer Legierung aus einem genannten Nitriden. Eine solche Schicht eignet sich insbesondere zur Hemmung der Diffusion von Luftsauerstoff und hat außerdem den Vorteil, dass sie verhältnismäßig hart ist. Ferner vorzugsweise ist zumindest eine Schicht, insbesondere eine weitere Schicht, aus Oxid, insbesondere Oxide von Si, Al, Ti, Zr, Zn, Sn, Ta, Nb, oder einem ternären System aus zumindest einem dieser Stoffe. Eine solche Schicht bildet insbesondere eine gute Barriere gegenüber Säuren. Für eine der Schichten, vorzugsweise eine weitere Schicht, können Carbide, Boride, Oxinitride, Carbonitride zum Einsatz kommen. Darüber hinaus können für die Barriereschicht und/oder eine der Schichten der Barriereschicht grundsätzlich auch die Materialien zum Einsatz kommen, welche auch für den Grundschichtbereich genutzt werden können, wobei diese sich insbesondere nach den chemischen bzw. atmosphärischen Anforderungen an eine derartige optisch-elektrische Leiteranordnung/Faser bzw. an Bauteile mit einer derartigen optisch-elektrische Leiteranordnung/Faser richten. Eine Schicht oder Schichtfolge kann beispielsweise herstellbar oder hergestellt sein durch ein Beschichtungsverfahren, wie weiter unten näher ausgeführt ist.

Der Grundschichtbereich, die Leitschicht und die Barriereschicht erstrecken sich zumindest teil- oder abschnittsweise in axialer Richtung des Lichtwellenleiters.

Der Grundschichtbereich kann eine amorphe Struktur aufweisen. Der Grundschichtbereich kann auch eine kristalline oder polykristalline Struktur aufweisen, insbesondere, wenn der Grundschichtbereich eine durch Beschichtung aufgebrachte Schicht umfasst. Die Leitschicht und/oder die Barriereschicht kann ebenfalls eine kristalline oder polykristalline oder ggf. auch amorphe Struktur aufweisen. Bevorzugt sind für Grundschichtbereich und Barriereschicht amorphe Schichten, um eine besonders gute Diffusionsbarriere zur gewährleisten. Als typische Beispiele für amorphe Diffusionsbarrieren sind SiO2, Si3N4, Al₂O₃, AlSiOx oder BN zu nennen, als typische Beispiele für kristalline Barrierebeschichtungen sind anatases oder rutiles TiO2, γ-Al₂O₃ oder kristallines AIN zu nennen. Insbesondere sind aber auch Mischphasen aus amorph und kristallin zu nennen.

Die beschriebene optisch-elektrische Leiteranordnung kann zumindest teil oder abschnittsweise noch eine Einschlauchung aufweisen, also von einem letzten Außenmantel umgeben sein, wobei dieser letzte Außenmantel fest oder lose umschließend ausgebildet sein kann. Es kann vorgesehen sein, dass ein distaler Abschnitt der optisch-elektrischen Leiteranordnung abisoliert wird oder verbleibt. Die Einschlauchung kann sich demnach überwiegend entlang der optisch-elektrischen Leiteranordnung erstrecken, wobei jedoch ein Teil der optisch-elektrischen Leiteranordnung, insbesondere ein Ende der Anordnung, keine Einschlauchung aufweist.

Mit der Erfindung wird ferner ein Verfahren zur Herstellung einer optisch-elektrischen Leiteranordnung bereitgestellt, wobei ein Lichtwellenleiter mit einer äußeren Mantelschicht bereitgestellt wird und die Mantelschicht des Lichtwellenleiters mit einem Funktionsschichtsystem beschichtet wird. Das Beschichten mit dem Funktionsschichtsystem umfasst zunächst das Erzeugen eines Grundschichtbereichs bestehend aus einer einzelnen Schicht oder einer Abfolge von Schichten und danach das Aufbringen (auf dem Grundschichtbereich) einer elektrisch leitenden Leitschicht bestehend aus einer einzelnen Schicht oder einer Abfolge von Schichten.

Das Erzeugen des Grundschichtbereichs umfasst das Vorbehandeln der Mantelschicht des Lichtwellenleiters, um eine oberflächliche Schicht mit zumindest einer veränderten Oberflächeneigenschaft, umfassend eine erhöhte Oberflächenenergie und/oder eine erhöhte Anzahl von Sauerstoffradikalen, zu erzeugen und optional um Rückstände zu entfernen. Das Erzeugen des Grundschichtbereichs kann zum anderen das Aufbringen (auf der äußeren Mantelschicht) einer Schicht oder eine Abfolge von Schichten umfassen, wobei insbesondere Kathoden-Zerstäubung, Hochfrequenz-Zerstäubung, Reaktiv-Zerstäubung und/oder Magnetron-Zerstäubung zum Einsatz kommt. Neben Kathoden-Zerstäubung (Sputtern) können auch andere Beschichtungsverfahren, insbesondere Vakuumverfahren (z.B. Aufdampfen, chemische Gasphasenabscheidung (CVD, z.B. PECVD, insb. PICVD)) zum Einsatz kommen. Als weitere Beschichtungsverfahren zum Aufbringen einer oder mehrerer Schichten des Grundschichtbereichs sind darüber hinaus Verfahren aus der flüssigen Phase, wie z.B. Tauchbeschichtung oder Sprühbeschichtungen möglich. Hierbei können weitere Funktionen wie Reibwertreduzierung mit funktionalisiert werden.

Das Vorbehandeln der Mantelschicht, um den Grundschichtbereich oder z.B. die unterste Schicht des Grundschichtbereichs zu bilden, erfolgt mittels chemischer oder physikalischer Prozesse zur Veränderung der Oberflächeneigenschaften der Mantelschicht.

Ein Vorbehandeln der Mantelschicht, d.h. der zu beschichtenden Oberfläche, ermöglicht eine gute Schichthaftung. Insbesondere können mit einer Plasmavorbehandlung (Niederdruck-Plasma oder atmosphärisches Plasma), einer Lichtbogenentladung (Corona) und/oder auch einer chemischen Vorbehandlung, z.B. mittels alkalischen Reinigern im Ultraschallbad, zumindest temporär hohe Oberflächenenergien erzeugt werden, so dass dadurch die Haftung deutlich verbessert werden kann. Mittels Plasmen lassen außerdem Fette, Öle oder ähnlich Rückstände entfernen und zusätzlich Sauerstoffradikale aktivieren. Es können aber auch Vorbehandlungsmethoden kombiniert werden.

Es kann auch vorgesehen sein, dass zuerst eine untere Schicht des Grundschichtbereichs gebildet wird, indem die Mantelschicht des Lichtwellenleiters wie vorstehend beschrieben vorbehandelt wird, und danach auf diese untere Schicht zumindest eine weitere Schicht des Grundschichtbereichs aufgebracht wird, wobei insbesondere die genannten Zerstäubungsmethoden (oder andere Beschichtungsverfahren) zum Einsatz kommen. Insbesondere kann mit dem Verfahrensschritt ein Grundschichtbereich erzeugt werden, wie sie im Zusammenhang mit der optisch-elektrischen Leiteranordnung beschrieben ist.

Das erfindungsgemäße Verfahren umfasst weiterhin das Aufbringen einer Barriereschicht auf die Leitschicht, wobei die Barriereschicht ausgebildet ist, in Eindiffundieren von Sauerstoff und/oder Ionen von sauren oder alkalischen Lösungen und optional von Polymerbestandteilen in die Leitschicht zu hemmen.

Das Aufbringen der elektrisch leitenden Leitschicht auf dem Grundschichtbereich erfolgt ebenfalls vorzugsweise mittels Kathoden-Zerstäubung, Hochfrequenz-Zerstäubung, Reaktiv-Zerstäubung und/oder Magnetron-Zerstäubung. Neben Kathoden-Zerstäubung (Sputtern) können wiederum auch andere Beschichtungsverfahren, insbesondere Vakuumverfahren (z.B. Aufdampfen, chemische Gasphasenabscheidung (CVD, z.B. PECVD, insb. PICVD)) zum Einsatz kommen. Mit dem Verfahrensschritt kann insbesondere eine Leitschicht auf den Grundschichtbereich aufgebracht werden, wie sie im Zusammenhang mit der optisch-elektrischen Leiteranordnung beschrieben ist.

Die Barriereschicht kann als einzelne Schicht oder als Abfolge von Schichten aufgebracht werden und hierzu kann jeweils insbesondere wiederum Kathoden-Zerstäubung, Hochfrequenz-Zerstäubung, Reaktiv-Zerstäubung und/oder Magnetron-Zerstäubung (oder andere Beschichtungsverfahren, wie z.B. die genannten Vakuumverfahren oder die genannten Verfahren aus der flüssigen Phase, wie z.B. Tauchbeschichtung oder Sprühbeschichtungen) zum Einsatz kommen.

Die Barriereschicht kann auch zur Reibwertreduzierung dienen. Mit dem Verfahrensschritt kann insbesondere eine Barriereschicht auf der Leitschicht aufgebracht werden, wie sie im Zusammenhang mit der optisch-elektrischen Leiteranordnung beschrieben ist.

Die genannten Beschichtungsverfahren, insbesondere Kathoden-Zerstäubungs-Verfahren, mit denen Schichten des Grundschichtbereichs, der Leitschicht und/oder der Barriereschicht aufgetragen werden können, erfolgt vorzugsweise bei Temperaturen von unter 50°C. Diese relativ niedrige Temperatur hat insbesondere den Vorteil, dass Lichtwellenleiter mit äußerer Polymerschicht beschichtet werden können.

Bevorzugt erfolgt das Erzeugen und/oder Aufbringen zumindest zweier Schichten im Vakuum und ohne Vakuumbruch. Es kann demnach beispielsweise im Vakuum zuerst der Grundschichtbereich erzeugt werden und danach in demselben Vakuum die Leitschicht aufgebracht werden. Ferner kann danach in demselben Vakuum noch die Barriereschicht aufgebracht werden.

Die Erfindung betrifft ferner eine medizintechnische Vorrichtung, insbesondere ein Endoskop, insbesondere zur Zahnbehandlung, umfassend eine optisch-elektrische Leiteranordnung wie vorstehend beschrieben. Eine solche medizintechnische Vorrichtung kann z.B. ausgebildet sein als ein medizintechnisches Faserbauteil mit einer optisch-elektrischen Leiteranordnung umfassend einen Lichtwellenleiter, etwa einer Quarzfaser, wobei der Lichtwellenleiter mit einem Funktionsschichtsystem beschichtet ist. Eine solche Vorrichtung kann beispielsweise ausgebildet sein für endoskopische Anwendungen oder Anwendungen im Dentalbereich (Zahnbehandlung). Die Erfindung betrifft ferner eine industrietechnische Vorrichtung, insbesondere eine Einrichtung zur Füllstandsüberwachung, insbesondere für Behälter oder Bioreaktoren, umfassend eine optisch-elektrische Leiteranordnung wie vorstehend beschrieben. Eine solche industrietechnische Vorrichtung kann beispielsweise für industrielle Anwendungen, z.B. für Füllstandssensoren in Behältern, Bioreaktoren oder Sicherheitsüberwachungen vorgesehen sein. Es wird insbesondere eine Füllstandüberwachung ermöglicht, bei der eine Impedanz-Änderung, je nachdem, ob die Faser in ein Medium eintaucht oder nicht, detektierbar und auswertbar ist. Außerdem wird eine Eindringtiefenmessung ermöglicht, bei der eine Impedanz-Änderung, je nachdem wie weit die Faser in ein umgebendes Medium eintaucht, detektierbar und auswertbar ist.

Die Erfindung betrifft schließlich die Verwendung einer vorstehend beschriebenen optisch-elektrischen Leiteranordnung für industrietechnische Anwendungen, insbesondere Anwendungen zur Füllstandsüberwachung oder Sicherheitsüberwachung. Außerdem betrifft die Erfindung die Verwendung einer vorstehend beschriebenen optisch-elektrische Leiteranordnung zur Messung einer Eindringtiefe der optisch-elektrischen Leiteranordnung in ein Medium durch Messung einer Impedanz der Leitschicht im umgebenden Medium. Die Impedanz der Leitschicht ändert sich in Verbindung mit dem umgebenden Medium. Hier addieren sich Wirk- und Blindwiderstände.

Nachfolgend werden Ausführungsbeispiele der optisch-elektrischen Leiteranordnung anhand der Figuren beschrieben. Dabei zeigt:
Figur 1: Querschnitt durch eine optisch-elektrische Leiteranordnung (1) mit einem optisch leitenden Kern (11), einer Umhüllung (12), einer Mantelschicht (13) und einem Funktionsschichtsystem (20).
Figur 2: Querschnitt durch eine optisch-elektrische Leiteranordnung (1) mit einem optisch leitenden Kern (11), einer Mantelschicht (13) und einem Funktionsschichtsystem (20).

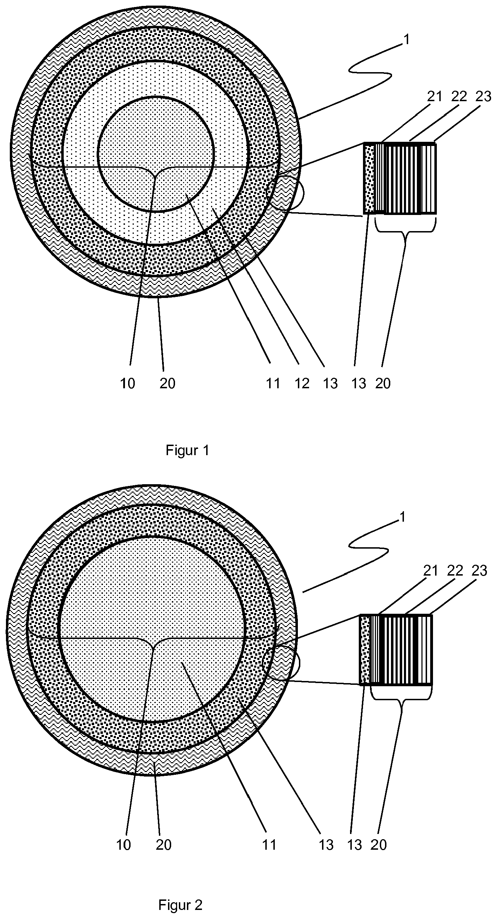

Figur 1 zeigt eine optisch-elektrische Leiteranordnung 1 mit einem Lichtwellenleiter 10. Der Lichtwellenleiter 10 weist einen Kern 11 (Core) aus Quarzglas auf und eine Umhüllung 12 (Cladding), hier ebenfalls aus Quarzglas. Der Brechungsindex n1 des Kerns 11 ist größer ist als der Brechungsindex n2 der Umhüllung 12. Zusätzlich und insbesondere als mechanischer Schutz ist eine als Polymerschicht/Polymermantel ausgebildete Mantelschicht 13 (Buffer) vorgesehen.

Die Mantelschicht 13 umfasst, wie für derartige Lichtwellenleiter üblich, Polyimid, PMMA oder Polyamid, oder besteht aus zumindest einem dieser Materialien.

Die optisch-elektrische Leiteranordnung 1 weist auf der Mantelschicht 13 ein Funktionsschichtsystem 20 auf, welches in diesem Beispiel aus einem als Haftvermittlerschicht ausgebildeten Grundschichtbereich 21 direkt auf der Mantelschicht 13, einer Leitschicht 22 und einer äußeren Barriereschicht (Passivierungsschicht) 23 besteht. Das Funktionsschichtsystem 20 auf der äußeren Mantelschicht 13 ist mittels Kathoden-Zerstäubung (Sputtern) oder einem anderen Vakuumverfahren (z.B. Aufdampfen) herstellbar.

Figur 2 zeigt eine optisch-elektrische Leiteranordnung 1 mit einem Lichtwellenleiter 10, wobei in diesem Fall der Lichtwellenleiter 10 einen Kern 11 und eine den Kern 11 unmittelbar umgebende Mantelschicht 13 aufweist. Der Brechungsindex n1 des Kerns 11 ist in diesem Fall geringfügig größer ist als der Brechungsindex n2 der Mantelschicht 13. Die Mantelschicht 13 ermöglicht somit eine Totalreflexion an der Grenzschicht zum Kern 11 und damit eine Lichtleitung. Zugleich kann die Mantelschicht 13 als mechanische Schutzschicht dienen.

Die optisch-elektrische Leiteranordnung 1 weist darüber hinaus ein Funktionsschichtsystem 20 auf, welches in gleicher Weise ausgebildet und herstellbar sein kann wie bei der Figur 1.

Wie bereits ausgeführt kann das Funktionsschichtsystem 20 mehrere Einzelschichten umfassen. Diese sind hier ein als Haftvermittlerschicht ausgebildeter Grundschichtbereich 21, die eigentliche Leitschicht 22 und eine Barriereschicht (Passivierungsschicht) 23. Hinsichtlich der Herstellung einer solchen optisch-elektrischen Leiteranordnung kann die gesamte Schichtfolge in einem Batch-Zyklus ohne Unterbrechung des Vakuum-Prozesses hintereinander durchgeführt werden, so dass auch kostengünstig mehrere Bauteile mit derartigen optisch-elektrischen Leiteranordnungen 1 parallel beschichtet werden können.

Nachfolgend werden weitere Ausführungsbeispiele der Herstellung einer optisch-elektrischen Leiteranordnung beschrieben.

Beispiel 1: Optisch-elektrische Leiteranordnung 1 mit einem als Quarzfaser ausgebildeten Lichtwellenleiter 10 mit einem Kern 11 dessen Durchmesser 150µm beträgt, einer Umhüllung 11, deren Durchmesser 180µm beträgt und eine als Polymerschicht ausgebildete Mantelschicht 13 aus Polyimid mit einem äußeren Durchmesser des Lichtwellenleiters 10 von insgesamt ca. 210 µm.

Es wurde ein Grundschichtbereich erzeugt, indem die Mantelschicht einer Vorbehandlung unterzogen wurde. Hierbei kam eine Ultraschallreinigung mit einem alkalischen, einem Neutralreiniger und einer IR-Trocknung zum Einsatz.

Es wurde eine Leitschicht aufgebracht bestehend aus einer Titanbeschichtung der Dicke 15nm, welche mittels DC-Magnetronsputtering hergestellt wurde. Die Beschichtung erfolgte im Vakuum bei einem Prozessdruck von unter 1E-2 mbar. Das Sputtertarget wurde mit einer Reinheit von 99% gewählt. Der Mindestabstand zwischen Substrat und Target wurde mit 5cm gewählt, wobei der Lichtwellenleiter in das Plasma hinein ragt.

Mittels einem 4-Punkt-Messgerät zur Bestimmung des Flächenwiderstands wurde ein Wert von 10 Ohm/sqr (wobei die Einheit Ohm/sqr der Einheit Ohm entspricht) gemessen. Dies entspricht einen spezifischen Widerstand von 1,5 E-5 Ohm cm. Die Haftung des Schichtsystems wurde mit einem Haftungstest nach DIN 58196-6 (1995-07) überprüft. Hierbei ergaben sich keine Ablösungen des Funktionsschichtsystems von dem Lichtwellenleiter.

Beispiel 2: Ein als Quarzfaser ausgebildeter Lichtwellenleiter mit einer Mantelschicht aus Polyimid wurde mittels einem Atmosphärenplasma in Form einer Corona Entladung gereinigt und voraktiviert. Anschließend erfolgte eine Beschichtung mittels reaktivem Mittelfrequenzplasma einer Siliziumoxid-Beschichtung, welche ohne Vakuumbruch mit einer leitfähigen Molybdänbeschichtung der Schichtdicke 24nm versehen wurde. Anschließend erfolgte eine Passivierung dieser Schicht ohne Vakuumbruch mittels reaktivem Magnetronsputtern mit einer Siliziumnitrid-Beschichtung der Schichtdicke 100nm.

In einer anschließenden Prüfung des Flächenwiderstands wurde ein Flächenwiderstand von 5 Ohm/sqr mittels einem induktiven Messverfahren, einem Wirbelstrommessgerät, bestimmt. Gemäß dem oben erwähnten Haftungstest konnten keine Delaminationen festgestellt werden. Beispiel 3: Ein als Quarzfaser ausgebildeter Lichtwellenleiter mit einer Mantelschicht aus Polyimid wird mittels Ultraschallreinigung gemäß Beispiel 1 gereinigt. Die direkt auf die Mantelschicht aufgebrachte Leitschicht umfasst Molybdän mit einem Flächenwiderstand von 10 Ohm/sqr. Zum Schutz der Molybdänbeschichtung erfolgt die Beschichtung einer Barrierebeschichtung aus TiO2. Beide Beschichtungen werden in einem Magnetron Sputterprozess im Vakuum hergestellt, wobei die Lichtwellenleiter in das Plasma hineinragen und damit eine nahezu homogene Beschichtung erzeugt wird. Die Beschichtungen erfolgen im Fall der Molybdänbeschichtung von einem metallischen Sputtertarget der Reinheit 3N, im Falle der TiO2 Beschichtung von einem metallischen Target oder einem teilkeramischen Target unter der Zugabe von Sauerstoff. Die TiO2 Beschichtung ist in diesem Falle teilweise amorph und teilweise anatase ausgebildet. In einem anschließenden mechanischen Belastungstest, bei welchem Aluminium Prüfkörper der Masse 22,5g über die Länge der Lichtwellenleiter gezogen werden zeigen sich anhand Lichtmikroskopischer Aufnahmen unter bis zu 100facher Vergrößerung keine Kratzer oder Delaminationen der metallischen Beschichtung.

Beispiel 4: In einem weiteren Ausführungsbeispiel wird ein als Quarzfaser ausgebildeter Lichtwellenleiter mit einer Mantelschicht aus Polyimid mittels nasschemischer Reinigung vorbehandelt. Danach erfolgt das Aufbringen von Schichten sowohl des Grundschichtbereichs als auch der Leitschicht unter Zugabe von Sauerstoff und Argon. Um eine verbesserte Haftung zwischen Mantelschicht und leitfähiger Schicht zu gewährleisten wird dazwischen eine Haftvermittlerschicht aus TiO2 ausgebildet, wobei zu dessen Herstellung das Verhältnis von Sauerstoff zu dem Gesamtfluss aus Sauerstoff und Argon kleiner 0,4 beträgt. Anschließend wird als leitfähige Beschichtung eine metallische Titan-Beschichtung des Flächenwiderstandes von 1 Ohm/sqr beschichtet, wobei zu dessen Herstellung das Verhältnis von Sauerstoff zu dem Gesamtfluss aus Sauerstoff und Argon kleiner 0,1 beträgt. Als zusätzliche Passivierung wird eine weitere TiO2-Beschichtung appliziert, wobei zu dessen Herstellung das Verhältnis von Sauerstoff zu dem Gesamtfluss aus Sauerstoff und Argon kleiner 0,7 beträgt.

Das Verhältnis von Sauerstoff zum Gesamtfluss (siehe oben genannte beispielhafte Verhältnisse) gibt an, wie nah sich das Ergebnis an dem Metallcharakter oder dem dielektrischen Charakter der TiO2-Schicht befindet.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Außerdem sind die Merkmale der optisch-elektrischen Leiteranordnung in entsprechender Weise auch als Merkmale für das Verfahren zur Herstellung einer optisch-elektrischen Leiteranordnung offenbart und umgekehrt. Merkmale definieren, unabhängig davon, ob sie in der Beschreibung, den Ansprüchen, den Figuren oder anderweitig offenbart sind, auch einzeln Bestandteile der Erfindung, selbst wenn sie zusammen mit anderen Merkmalen gemeinsam beschrieben sind.

**Bezugszeichenliste**

| | |
|---|---|
| 1 | Optisch-elektrische Leiteranordnung |
| 10 | Lichtwellenleiter |
| 11 | Optisch leitender Kern |
| 12 | Umhüllung |
| 13 | Organische Mantelschicht |
| 20 | Funktionsschichtsystem |
| 21 | Grundschichtbereich |
| 22 | Leitschicht |
| 23 | Barriereschicht |

## Patentansprüche

1. Optisch-elektrische Leiteranordnung (1) umfassend:
- einen Lichtwellenleiter (10) mit einer äußeren, organischen Mantelschicht (13),
- einen Grundschichtbereich (21) bestehend aus einer einzelnen Schicht oder einer Abfolge von Schichten, und
- eine auf dem Grundschichtbereich (21) aufgebrachte elektrisch leitende Leitschicht (22) bestehend aus einer einzelnen Schicht oder einer Abfolge von Schichten
- sowie eine auf der Leitschicht (22) aufgebrachte Barriereschicht (23) bestehend aus einer einzelnen Schicht oder einer Abfolge von Schichten, umfassend eine Schicht mit einem Nitrid, Oxid, Carbid, Borid, Oxinitrid oder Carbonitrid, wobei die Barriereschicht (23) ausgebildet ist, ein Eindiffundieren von Sauerstoff und/oder Ionen von sauren oder alkalischen Lösungen in die Leitschicht (22) zu hemmen
**dadurch gekennzeichnet, dass** der Grundschichtbereich (21) gebildet ist durch oder umfasst: eine oberflächliche Schicht der äußeren Mantelschicht (13) mit zumindest einer veränderten Oberflächeneigenschaft umfassend eine erhöhte Oberflächenenergie und/oder eine erhöhte Anzahl von Sauerstoffradikalen, hergestellt oder herstellbar mittels eines chemischen und/oder physikalischen Prozesses zur Veränderung der Oberflächeneigenschaft der äußeren Mantelschicht (13),

2. Optisch-elektrische Leiteranordnung (1) nach Anspruch 1, wobei der Lichtwellenleiter (10) umfasst:
- einen optisch leitenden Kern (11) und
- vorzugsweise eine Umhüllung (12), welche den Kern (11) umgibt und zwischen dem Kern (11) und der äußeren Mantelschicht (13) angeordnet ist,
- und wobei der optisch leitende Kern (11) einen Brechungsindex aufweist, welcher größer ist als ein Brechungsindex, welchen die äußere Mantelschicht (13) aufweist und/oder größer ist als ein Brechungsindex, welchen die Umhüllung (12) aufweist.

3. Optisch-elektrische Leiteranordnung (1) nach einem der vorstehenden Ansprüche, wobei die organische Mantelschicht (13) Polyamid, PA, Polyimid, PI, oder Polymethylmethacrylat, PMMA, oder Wachs, wachsähnliche Bestandteile oder Alkylsilan umfasst.

4. Optisch-elektrische Leiteranordnung (1) nach einem der vorstehenden Ansprüche, wobei der Grundschichtbereich (21) umfasst:
- eine auf der äußeren Mantelschicht (13) aufgebrachte Schicht mit einem Oxid, insbesondere SiO_{2,} TiO_{2,} Al₂O_{3,} SnO_{2,} HfOz oder einem Borid, Carbid, Nitrid, Oxinitrid, Carbonitrid oder einem Metall, insbesondere Si, Ti, Mo oder Cr,
- oder eine auf der äußeren Mantelschicht (13) aufgebrachte Abfolge solcher Schichten.

5. Optisch-elektrische Leiteranordnung (1) nach einem der vorstehenden Ansprüche, wobei der Grundschichtbereich eine Dicke zwischen 5nm und 3000nm, bevorzugt zwischen 5nm und 1000nm, besonders bevorzugt zwischen 10nm und 100nm aufweist und/oder wobei die einzelnen Schichten des Grundschichtbereichs jeweils eine Dicke zwischen 5nm und 1000nm bevorzugt zwischen 10nm und 100nm aufweisen.

6. Optisch-elektrische Leiteranordnung (1) nach einem der vorstehenden Ansprüche, wobei zwischen dem Grundschichtbereich (21) und der darauf aufgebrachten Leitschicht (22) eine Haftung besteht, welche größer ist als eine Haftung, welche zwischen der äußeren Mantelschicht (13) und einer darauf aufgebrachten identischen Leitschicht (22) bestehen würde.

7. Optisch-elektrische Leiteranordnung (1) nach einem der vorstehenden Ansprüche, wobei zumindest eine der auf der äußeren Mantelschicht (13) aufgebrachten Schichten des Grundschichtbereichs (21) ausgebildet ist, ein Eindiffundieren von Sauerstoff und/oder Ionen von sauren oder alkalischen Lösungen in die Leitschicht (22) zu hemmen.

8. Optisch-elektrische Leiteranordnung (1) nach einem der vorstehenden Ansprüche, wobei der Grundschichtbereich (21) einen thermischen Ausdehnungskoeffizienten aufweist, welcher zwischen einem thermischen Ausdehnungskoeffizienten liegt, welchen die Mantelschicht (13) aufweist, und einem thermischen Ausdehnungskoeffizienten, welchen die Leitschicht (22) aufweist.

9. Optisch-elektrische Leiteranordnung (1) nach einem der vorstehenden Ansprüche, wobei der Grundschichtbereich eine Abfolge von Schichten umfasst, welche jeweils einen thermischen Ausdehnungskoeffizienten aufweisen, welche entsprechend der Abfolge der Schichten aufsteigen oder absteigen.

10. Optisch-elektrische Leiteranordnung (1) nach einem der vorstehenden Ansprüche, wobei die Leitschicht (22) umfasst:
- eine auf dem Grundschichtbereich (21) aufgebrachte Schicht mit Titan, Silizium, Aluminium, Gold, Silber, Molybdän, Wolfram oder Zirkon, insbesondere einer Legierung eines dieser Stoffe mit Ni, Zn, Y, Sn, Ge
- oder eine auf dem Grundschichtbereich (21) aufgebrachte Abfolge solcher Schichten.

11. Optisch-elektrische Leiteranordnung (1) nach einem der vorstehenden Ansprüche, wobei die Leitschicht (22) eine Dicke zwischen 5nm und 6000nm, bevorzugt zwischen 5nm und 2000nm, besonders bevorzugt zwischen 10nm und 200nm aufweist und/oder wobei einzelne Schichten der Leitschicht jeweils eine Dicke zwischen 5nm und 2000nm bevorzugt zwischen 10nm und 200nm aufweisen.

12. Optisch-elektrische Leiteranordnung (1) nach einem der vorstehenden Ansprüche, wobei die Leitschicht (22) einen Flächenwiderstand zwischen 0,01 und 1000 Ohm/sqr, bevorzugt zwischen 0,01 und 100 Ohm/sqr, besonders bevorzugt zwischen 0,01 und 50 Ohm/sqr aufweist.

13. Optisch-elektrische Leiteranordnung (1) nach einem der vorstehenden Ansprüche, wobei zumindest eine der auf der Leitschicht (22) aufgebrachten Schichten der Barriereschicht (23) eine Härte von mindestens 800 HV, vorzugsweise mindestens 1200 HV, besonders bevorzugt mindestens 2000 HV gemäß der Prüfnorm DIN EN ISO 14577-4:2007-8 aufweist.

14. Optisch-elektrische Leiteranordnung (1) nach einem der vorstehenden Ansprüche, wobei die Barriereschicht (23) umfasst:
- eine auf der Leitschicht (22) aufgebrachte Schicht mit einem Nitrid, nämlich Si₃N₄, BN, AIN, TiN, AISiN, SiON, SiAION oder einer Legierung eines dieser Stoffe, oder mit einem Oxid, nämlich Oxide von Si, Al, Ti, Zr, Zn, Sn, Ta, Nb, Y, TiO₂ SiO₂ oder einem ternären System aus zumindest einem dieser Stoffe,
- oder eine auf der Leitschicht (22) aufgebrachte Abfolge solcher Schichten.

15. Verfahren zur Herstellung einer optisch-elektrischen Leiteranordnung (1) umfassend:
- Bereitstellen eines Lichtwellenleiters (10) mit einer äußeren, organischen Mantelschicht (13),
- Beschichten der Mantelschicht (13) des Lichtwellenleiters mit einem Funktionsschichtsystem (20), umfassend:
- Erzeugen eines Grundschichtbereichs (21) bestehend aus einer einzelnen Schicht oder einer Abfolge von Schichten,
- Auf dem Grundschichtbereich Aufbringen einer elektrisch leitenden Leitschicht (22) bestehend aus einer einzelnen Schicht oder einer Abfolge von Schichten sowie
- Auf der Leitschicht (22) Aufbringen einer Barriereschicht (23) bestehend aus einer einzelnen Schicht oder eine Abfolge von Schichten, umfassend eine Schicht mit einem Nitrid, Oxid, Carbid, Borid, Oxinitrid oder Carbonitrid, wobei die Barriereschicht (23) ausgebildet ist, ein Eindiffundieren von Sauerstoff und/oder Ionen von sauren oder alkalischen Lösungen in die Leitschicht (22) zu hemmen,
**dadurch gekennzeichnet, dass** das Erzeugen des Grundschichtbereichs (21) umfasst:
Vorbehandeln der Mantelschicht (13) mittels chemischer oder physikalischer Prozesse zur Veränderung der Oberflächeneigenschaften der Mantelschicht, um eine oberflächliche Schicht der Mantelschicht (13) mit zumindest einer veränderten Oberflächeneigenschaft zu erzeugen, die veränderte Oberflächeneigenschaft umfassend eine erhöhte Oberflächenenergie und/oder eine erhöhte Anzahl von Sauerstoffradikalen.

16. Verfahren nach Anspruch 15, wobei das Vorbehandeln der Mantelschicht (13) des Lichtwellenleiters (10) weiterhin umfasst Rückstände zu entfernen.

17. Verfahren nach Anspruch 15 oder 16, Anspruch oder wobei das Erzeugen des Grundschichtbereichs (21) umfasst:
- Auf der äußeren Mantelschicht (13) Aufbringen einer Schicht oder eine Abfolge von Schichten, insbesondere mittels Kathoden-Zerstäubung, Hochfrequenz-Zerstäubung, Reaktiv-Zerstäubung und/oder Magnetron-Zerstäubung.

18. Verfahren nach einem der Ansprüche 15 bis 17, wobei das Aufbringen der Leitschicht (22) mittels Kathoden-Zerstäubung, Hochfrequenz-Zerstäubung, Reaktiv-Zerstäubung und/oder Magnetron-Zerstäubung erfolgt.

19. Verfahren nach einem der Ansprüche 15 bis 18, wobei das Aufbringen der Barriereschicht (23) mittels Kathoden-Zerstäubung, Hochfrequenz-Zerstäubung, Reaktiv-Zerstäubung und/oder Magnetron-Zerstäubung erfolgt.

20. Verfahren nach einem der Ansprüche 15 bis 19, wobei das Erzeugen und/oder Aufbringen zumindest zweier Schichten im Vakuum und ohne Vakuumbruch erfolgt.

21. Verfahren nach einem der Ansprüche is 20, wobei das Aufbringen einer oder mehrerer Schichten unter Zugabe von Sauerstoff und Argon erfolgt, wobei mit dem Verhältnis von Sauerstoff zum Gesamtfluss Sauerstoff und Argon der metallische bzw. dielektrische Charakter der jeweiligen Schicht beeinflusst wird.

22. Medizintechnische Vorrichtung, insbesondere zur Zahnbehandlung, Gewebebehandlung und/oder Gewebestimulation, umfassend eine optisch-elektrische Leiteranordnung (1) nach einem der Ansprüche 1 bis 14.

23. industrietechnische Vorrichtung, insbesondere Einrichtung zur Füllstandsüberwachung, insbesondere für Behälter oder Bioreaktoren, umfassend eine optisch-elektrische Leiteranordnung (1) nach einem der Ansprüche 1 bis 14.

24. Verwendung einer optisch-elektrischen Leiteranordnung nach einem der Ansprüche 1 bis 14 oder einer Vorrichtung nach einem der Ansprüche 22 oder 23 zur Messung einer Eindringtiefe der optisch-elektrischen Leiteranordnung (1) in ein Medium durch Messung einer Impedanz der Leitschicht (22) im umgebenden Medium.

## Claims

1. An optical-electrical conductor assembly (1) comprising:
- an optical waveguide (10) having an outer organic jacket layer (13);
- a base layer portion (21) consisting of a single layer or a sequence of layers; and
- an electrically conducting conductive layer (22) disposed on the base layer portion (21) and consisting of a single layer or a sequence of layers;
- and a barrier layer (23) disposed on the conductive layer (22) and consisting of a single layer or a sequence of layers, comprising a layer including a nitride, oxide, carbide, boride, oxynitride, or carbonitride, wherein the barrier layer (23) is adapted to inhibit oxygen and/or ions from acidic or alkaline solutions from diffusing into the conductive layer (22);
**characterized in that** the base layer portion (21) is defined by or comprises: a near-surface layer of the outer jacket layer (13), which has at least one altered surface property comprising increased surface energy and/or an increased number of oxygen radicals, produced or producible by a chemical and/or physical process for altering the surface property of the outer jacket layer (13).

2. The optical-electrical conductor assembly (1) according to claim 1, wherein the optical waveguide (10) comprises:
- an optically conductive core (11); and
- preferably a cladding (12) surrounding the core (11) and being disposed between the core (11) and the outer jacket layer (13);
- and wherein the optically conductive core (11) has a refractive index which is greater than a refractive index of the outer jacket layer (13) and/or greater than a refractive index of the cladding (12).

3. The optical-electrical conductor assembly (1) according to any one of the preceding claims, wherein the organic jacket layer (13) comprises polyamide, PA, polyimide, PI, or polymethyl methacrylate, PMMA, or wax, wax-like constituents, or alkyl silane.

4. The optical-electrical conductor assembly (1) according to any one of the preceding claims, wherein the base layer portion (21) comprises:
- a layer disposed on the outer jacket layer (13), comprising an oxide, in particular SiO₂, TiO₂, Al₂O₃, SnO₂, HfO₂, or a boride, carbide, nitride, oxynitride, carbonitride, or a metal, in particular Si, Ti, Mo or Cr;
- or a sequence of such layers applied on the outer jacket layer (13).

5. The optical-electrical conductor assembly (1) according to any one of the preceding claims, wherein the base layer portion has a thickness between 5 nm and 3000 nm, preferably between 5 nm and 1000 nm, most preferably between 10 nm and 100 nm; and/or wherein the individual layers of the base layer portion each have a thickness between 5 nm and 1000 nm, preferably between 10 nm and 100 nm.

6. The optical-electrical conductor assembly (1) according to any one of the preceding claims, wherein adhesion between the base layer portion (21) and the conductive layer (22) disposed thereon is greater than adhesion would be between the outer jacket layer (13) and an identical conductive layer (22) disposed thereon.

7. The optical-electrical conductor assembly (1) according to any one of the preceding claims, wherein at least one of the layers of the base layer portion (21) disposed on the outer jacket layer (13) is adapted to inhibit oxygen and/or ions from acidic or alkaline solutions from diffusing into the conductive layer (22).

8. The optical-electrical conductor assembly (1) according to any one of the preceding claims, wherein the base layer portion (21) has a thermal expansion coefficient which is between a thermal expansion coefficient of the jacket layer (13) and a thermal expansion coefficient of the conductive layer (22).

9. The optical-electrical conductor assembly (1) according to any one of the preceding claims, wherein the base layer portion comprises a sequence of layers which have a respective thermal expansion coefficient which increases or decreases across the sequence of layers.

10. The optical-electrical conductor assembly (1) according to any one of the preceding claims, wherein the conductive layer (22) comprises:
- a layer disposed on the base layer portion (21), which comprises titanium, silicon, aluminium, gold, silver, molybdenum, tungsten or zirconium, in particular an alloy of any of these substances with Ni, Zn, Y, Sn, Ge;
- or a sequence of such layers disposed on the base layer portion (21).

11. The optical-electrical conductor assembly (1) according to any one of the preceding claims, wherein the conductive layer (22) has a thickness between 5 nm and 6000 nm, preferably between 5 nm and 2000 nm, most preferably between 10 nm and 200 nm, and/or wherein individual layers of the conductive layer each have a thickness between 5 nm and 2000 nm, preferably between 10 nm and 200 nm.

12. The optical-electrical conductor assembly (1) according to any one of the preceding claims, wherein the conductive layer (22) has a sheet resistance between 0.01 and 1000 ohms/sq, preferably between 0.01 and 100 ohms/sq, most preferably between 0.01 and 50 ohms/sq.

13. The optical-electrical conductor assembly (1) according to any one of the preceding claims, wherein at least one of the layers of the barrier layer (23) disposed on the conductive layer (22) has a hardness of at least 800 HV, preferably at least 1200 HV, most preferably at least 2000 HV, in compliance with the DIN EN ISO 14577-4:2007-8 test standard.

14. The optical-electrical conductor assembly (1) according to any one of the preceding claims, wherein the barrier layer (23) comprises:
- a layer disposed on the conductive layer (22), which comprises a nitride, namely Si₃N₄, BN, AIN, TiN, AlSiN, SiON, SiAlON, or an alloy of any of these substances, or which comprises an oxide, namely oxides of Si, Al, Ti, Zr, Zn, Sn, Ta, Nb, Y, TiO₂, SiO₂ or a ternary system comprising at least one of these substances;
- or a sequence of such layers disposed on the conductive layer (22).

15. A method for producing an optical-electrical conductor assembly (1), comprising:
- providing an optical waveguide (10) that has an outer organic jacket layer (13);
- coating the jacket layer (13) of the optical waveguide with a functional layer system (20), comprising:
- producing a base layer portion (21) consisting of a single layer or a sequence of layers;
- depositing, on said base layer portion, an electrically conducting conductive layer (22) consisting of a single layer or a sequence of layers; and
- depositing, on the conductive layer (22), a barrier layer (23) consisting of a single layer or a sequence of layers, comprising a layer that includes a nitride, oxide, carbide, boride, oxynitride, or carbonitride, wherein the barrier layer (23) is adapted to inhibit oxygen and/or ions from acidic or alkaline solutions from diffusing into the conductive layer (22);
**characterized in that** the producing of the base layer portion (21) comprises:
pretreating of the jacket layer (13) by chemical or physical processes so as to alter the surface properties of the jacket layer in order to produce a near-surface layer of the jacket layer (13), which has at least one altered surface property, wherein the altered surface property comprises an increased surface energy and/or an increased number of oxygen radicals.

16. The method according to claim 15, wherein the pretreating of the jacket layer (13) of the optical waveguide (10) furthermore comprises to remove residues.

17. The method according to claim 15 or 16, wherein the producing of the base layer portion (21) comprises:
- depositing a layer or a sequence of layers on the outer jacket layer (13), in particular by cathode sputter deposition, high-frequency sputter deposition, reactive sputter deposition and/or magnetron sputter deposition.

18. The method according to any one of claims 15 to 17, wherein the depositing of the conductive layer (22) is performed by cathode sputter deposition, high-frequency sputter deposition, reactive sputter deposition and/or magnetron sputter deposition.

19. The method according to any one of claims 15 to 18, wherein the depositing of the barrier layer (23) is performed by cathode sputter deposition, high-frequency sputter deposition, reactive sputter deposition and/or magnetron sputter deposition.

20. The method according to any one of claims 15 to 19, wherein the producing and/or depositing of at least two layers is performed under vacuum and without interrupting the vacuum.

21. The method according to any one of claims 15 to 20, wherein the depositing of one or more layers is performed while feeding oxygen and argon, wherein the metallic or dielectric nature of the respective layer is controlled through the ratio of oxygen to the total flow of oxygen and argon.

22. A medical technical device, in particular for dental treatment, tissue treatment, and/or tissue stimulation, comprising an optical-electrical conductor assembly (1) according to any one of claims 1 to 14.

23. An industrial technical device, in particular a device for fill level monitoring, in particular for containers or bioreactors, comprising an optical-electrical conductor assembly (1) according to any one of claims 1 to 14.

24. Use of an optical-electrical conductor assembly according to any one of claims 1 to 14 or of a device according to any one of claims 22 or 23 for measuring a penetration depth of the optical-electrical conductor assembly (1) in a medium by measuring an impedance of the conductive layer (22) in the surrounding medium.

## Revendications

1. Agencement de conducteur opto-électrique (1) comprenant :
- un guide d'ondes optiques (10) avec une couche enveloppe (13) organique extérieure,
- une zone de couche de base (21) se composant d'une couche individuelle ou d'une suite de couches, et
- une couche (22) électroconductrice appliquée sur la zone de couche de base (21) se composant d'une couche individuelle ou d'une suite de couches,
- ainsi qu'une couche barrière (23) appliquée sur la couche conductrice (22) se composant d'une couche individuelle ou d'une suite de couches, comprenant une couche avec un nitrure, oxyde, carbure, borure, oxynitrure ou carbonitrure, dans lequel la couche barrière (23) est réalisée afin d'empêcher une diffusion d'oxygène et/ou d'ions de solutions acides ou alcalines dans la couche conductrice (22),
**caractérisé en ce que** la zone de couche de base (21) est formée par ou comporte : une couche superficielle de la couche enveloppe (13) extérieure avec au moins une propriété de surface modifiée comprenant une énergie de surface accrue et/ou un nombre accru de radicaux oxygène, fabriquée ou pouvant être fabriquée au moyen d'un processus chimique et/ou physique pour la modification de la propriété de surface de la couche enveloppe (13) extérieure.

2. Agencement de conducteur opto-électrique (1) selon la revendication 1, dans lequel le guide d'ondes optiques (10) comporte :
- un noyau (11) opto-conducteur et
- de préférence une enveloppe (12) qui entoure le noyau (11) et est agencée entre le noyau (11) et la couche enveloppe (13) extérieure,
- et dans lequel le noyau opto-conducteur (11) présente un indice de réfraction qui est supérieur à un indice de réfraction que présente la couche enveloppe (13) extérieure et/ou est supérieur à un indice de réfraction que présente l'enveloppe (12).

3. Agencement de conducteur opto-électrique (1) selon l'une quelconque des revendications précédentes, dans lequel la couche enveloppe (13) organique comporte du polyamide, PA, polyimide, PI, ou du polyméthylméthacrylate, PMMA, ou de la cire, des constituants similaires à la cire ou de l'alkylsilane.

4. Agencement de conducteur opto-électrique (1) selon l'une quelconque des revendications précédentes, dans lequel la zone de couche de base (21) comporte :
- une couche appliquée sur la couche enveloppe (13) extérieure avec un oxyde, en particulier SiO₂, TiO₂, Al₂O₃, SnO₂, HfO₂ ou un borure, carbure, nitrure, oxynitrure, carbonitrure ou un métal, en particulier Si, Ti, Mo ou Cr,
- ou une suite appliquée sur la couche enveloppe (13) extérieure de telles couches.

5. Agencement de conducteur opto-électrique (1) selon l'une quelconque des revendications précédentes, dans lequel la zone de couche de base présente une épaisseur entre 5 nm et 3000 nm, de préférence entre 5 nm et 1000 nm, de manière particulièrement préférée entre 10 nm et 100 nm et/ou dans lequel les couches individuelles de la zone de couche de base présentent respectivement une épaisseur entre 5 nm et 1000 nm de préférence entre 10 nm et 100 nm.

6. Agencement de conducteur opto-électrique (1) selon l'une quelconque des revendications précédentes, dans lequel une adhérence existe entre la zone de couche de base (21) et la couche conductrice (22) appliquée sur celle-ci, laquelle est supérieure à une adhérence qui existerait entre la couche enveloppe (13) extérieure et une couche conductrice (22) identique appliquée sur celle-ci.

7. Agencement de conducteur opto-électrique (1) selon l'une quelconque des revendications précédentes, dans lequel au moins une des couches appliquées sur la couche enveloppe (13) extérieure de la zone de couche de base (21) est réalisée afin d'empêcher une diffusion d'oxygène et/ou d'ions de solutions acides ou alcalines dans la couche conductrice (22).

8. Agencement de conducteur opto-électrique (1) selon l'une quelconque des revendications précédentes, dans lequel la zone de couche de base (21) présente un coefficient de dilatation thermique qui se trouve entre un coefficient de dilatation thermique que présente la couche enveloppe (13), et un coefficient de dilatation thermique que présente la couche conductrice (22).

9. Agencement de conducteur opto-électrique (1) selon l'une quelconque des revendications précédentes, dans lequel la zone de couche de base comporte une suite de couches qui présentent respectivement un coefficient de dilatation thermique qui augmente ou diminue selon la suite des couches.

10. Agencement de conducteur opto-électrique (1) selon l'une quelconque des revendications précédentes, dans lequel la couche conductrice (22) comporte :
- une couche appliquée sur la zone de couche de base (21) avec du titane, silicium, aluminium, or, argent, molybdène, tungstène ou zircon, en particulier un alliage d'une de ces substances avec Ni, Zn, Y, Sn, Ge,
- ou une suite appliquée sur la zone de couche de base (21) de telles couches.

11. Agencement de conducteur opto-électrique (1) selon l'une quelconque des revendications précédentes, dans lequel la couche conductrice (22) présente une épaisseur entre 5 nm et 6000 nm, de préférence entre 5 nm et 2000 nm, de manière particulièrement préférée entre 10 nm et 200 nm et/ou dans lequel des couches individuelles de la couche conductrice présentent respectivement une épaisseur entre 5 nm et 2000 nm, de préférence entre 10 nm et 200 nm.

12. Agencement de conducteur opto-électrique (1) selon l'une quelconque des revendications précédentes, dans lequel la couche conductrice (22) présente une résistance carrée entre 0,01 et 1000 ohms/sqr, de préférence entre 0,01 et 100 ohms/sqr, de manière particulièrement préférée entre 0,01 et 50 ohms/sqr.

13. Agencement de conducteur opto-électrique (1) selon l'une quelconque des revendications précédentes, dans lequel
au moins une des couches appliquées sur la couche conductrice (22) de la couche barrière (23) présente une dureté d'au moins 800 HV, de préférence au moins 1200 HV, de manière particulièrement préférée au moins 2000 HV selon la norme de contrôle DIN EN ISO 14577-4:2007-8.

14. Agencement de conducteur opto-électrique (1) selon l'une quelconque des revendications précédentes, dans lequel la couche barrière (23) comporte :
- une couche appliquée sur la couche conductrice (22) avec un nitrure, à savoir Si₃N₄, BN, AIN, TiN, AISiN, SiON, SiAION ou un alliage d'une de ces substances, ou avec un oxyde, à savoir des oxydes de Si, Al, Ti, Zr, Zn, Sn, Ta, Nb, Y, TiO₂ SiO₂ ou un système ternaire d'au moins une de ces substances,
- ou une suite appliquée sur la couche conductrice (22) de telles couches.

15. Procédé de fabrication d'un agencement de conducteur opto-électrique (1) comprenant :
- la fourniture d'un guide d'ondes optiques (10) avec une couche enveloppe (13) organique extérieure,
- le revêtement de la couche enveloppe (13) du guide d'ondes optiques avec un système de couche fonctionnelle (20) comprenant :
- la génération d'une zone de couche de base (21) se composant d'une couche individuelle ou d'une suite de couches,
- sur la zone de couche de base l'application d'une couche (22) électroconductrice se composant d'une couche individuelle ou d'une suite de couches ainsi que
- sur la zone conductrice (22) l'application d'une couche barrière (23) se composant d'une couche individuelle ou d'une suite de couches, comprenant une couche avec un nitrure, oxyde, carbure, borure, oxynitrure ou carbonitrure, dans lequel la couche barrière (23) est réalisée afin d'empêcher une diffusion d'oxygène, et/ou d'ions de solutions acides ou alcalines dans la couche conductrice (22),
**caractérisé en ce que** la génération de la zone de couche de base (21) comporte :
le prétraitement de la couche enveloppe (13) au moyen de processus chimiques ou physiques pour la modification des propriétés de surface de la couche enveloppe afin de générer une couche superficielle de la couche enveloppe (13) avec au moins une propriété de surface modifiée, la propriété de surface modifiée comprenant une énergie de surface accrue et/ou un nombre accru de radicaux oxygène.

16. Procédé selon la revendication 15, dans lequel le prétraitement de la couche enveloppe (13) du guide d'ondes optiques (10) comporte en outre des résidus à retirer.

17. Procédé selon la revendication 15 ou 16, dans lequel la génération de la zone de couche de base (21) comporte :
- sur la couche enveloppe (13) extérieure l'application d'une couche ou d'une suite de couches, en particulier par pulvérisation cathodique, pulvérisation haute fréquence, pulvérisation réactive et/ou pulvérisation à magnétron.

18. Procédé selon l'une quelconque des revendications 15 à 17, dans lequel l'application de la couche conductrice (22) est effectuée par pulvérisation cathodique, pulvérisation haute fréquence, pulvérisation réactive et/ou pulvérisation à magnétron.

19. Procédé selon l'une quelconque des revendications 15 à 18, dans lequel l'application de la couche barrière (23) est effectuée par pulvérisation cathodique, pulvérisation haute fréquence, pulvérisation réactive et/ou pulvérisation à magnétron.

20. Procédé selon l'une quelconque des revendications 15 à 19, dans lequel la génération et/ou l'application au moins de deux couches est effectuée dans le vide et sans rupture de vide.

21. Procédé selon l'une quelconque des revendications 15 à 20, dans lequel l'application d'une ou plusieurs couches est effectuée par ajout d'oxygène et d'argon, dans lequel le caractère métallique ou diélectrique de la couche respective est influencé par le rapport d'oxygène au flux entier d'oxygène et d'argon.

22. Dispositif médical, en particulier pour le traitement dentaire, le traitement des tissus et/ou la stimulation des tissus, comprenant un agencement conducteur opto-électrique (1) selon l'une quelconque des revendications 1 à 14.

23. Dispositif industriel, en particulier dispositif de surveillance de niveau, en particulier pour des récipients ou bioréacteurs, comprenant un agencement conducteur opto-électrique (1) selon l'une quelconque des revendications 1 à 14.

24. Utilisation d'un agencement conducteur opto-électrique selon l'une quelconque des revendications 1 à 14, ou d'un dispositif selon l'une quelconque des revendications 22 ou 23 pour la mesure d'une profondeur de pénétration de l'agencement conducteur opto-électrique (1) dans un milieu par mesure d'une impédance de la couche conductrice (22) dans le milieu environnant.
